# EUROPEAN PATENT SPECIFICATION

(11) **EP 2 354 078 B1**
(45) Date of publication and mention of the grant of the patent: **28.08.2013**
(21) Application number: 10151797.7
(22) Date of filing: 27.01.2010
(51) Int. Cl.: B66F 9/075, B62B 3/06, B66F 17/00, B60G 3/01

(54) **Industrial truck**
Flurförderzeug
Camion industriel

(43) Date of publication of application: 10.08.2011
(73) Proprietor: BT Products AB, 595 81 Mjölby (SE)
(72) Inventor: Carlson, Magnus, 590 47, VIKINGSTAD (SE)
(74) Representative: Rasch, Teija Kaarina

(56) References cited:
- EP-A1- 0 329 504
- EP-A1- 0 329 946
- EP-A1- 2 030 939
- EP-A2- 1 172 277
- EP-A2- 2 053 013
- DE-A1-102004 030 113
- JP-A- 7 187 025
- US-A- 4 750 579

## Description

### TECHNICAL FIELD

The present invention relates to an industrial truck having a suspension unit for a driving and steering wheel.

### BACKGROUND ART

In most industrial trucks, a plurality of wheels is arranged under a truck body. One of the wheels is a driving and steering wheel, by means of which the truck is controlled, i.e. accelerated, decelerated and steered sideways. The driving and steering wheel is resiliently biased towards the ground which gives a predetermined contact force between said wheel and the ground.

Sufficient lateral stability of the industrial truck is important. The lateral stability is influenced e.g. by unevenly distributed load, large height of the lift forks, high acceleration sideways, low speed, and if the industrial truck already is in an inclined condition. If a lateral instable condition occurs, the industrial truck may run the risk of overturn. In reality, the process is rather fast. Consequently, lateral instable conditions of an industrial truck have to be taken care of rapidly.

JP-A-7187025 discloses an arrangement for support of a car body, such as an industrial truck, at the time of sideway tilt of the car body. The arrangement, being arranged on the side of car body, is mainly composed of a hydraulic cylinder capable of expansion and contraction. A castor wheel is attached to the tip of a rod of the cylinder part. A controller expands and contracts a cylinder part, upon receiving the signal of a posture angle sensor which detects the tilt posture of the car body. This solution is disadvantageous in that it is complex and expensive in manufacture. The arrangement does not take into account other instable conditions of an industrial truck than the tilt posture.

EP-A1 -0329946 discloses an industrial truck. A drive wheel is under pressure kept in engagement with the floor. The truck is provided with a lever device, whose front end is mounted on the frame of the truck and whose rear end rests on the drive-wheel set. A higher pressure is obtained on the drive-wheel set via the lever device when the truck has a heavy load, and vice versa. This solution does not solve the problem of lateral instability.

US 4750579 A discloses an industrial truck with an arrangement comprising a spring including a hydraulic cylinder, arranged via link arms between the chassis and the drive wheel.

EP 2053013 A2 discloses magneto-rheological inertial damping system for a lift truck, comprising a magneto-rheological damper arranged between a base frame of the truck and a frame holding a vertically spring suspended wheel.

EP 2030939 A1 discloses an individual truck according to the preamble of claim 1.

The object of the present invention is to provide an industrial truck with a suspension unit for a driving and steering wheel, which overcomes the disadvantages of prior art. A further object is to provide an alternative solution in view of the state of the art and an improved industrial truck for obtaining sufficient lateral stability of an industrial truck during various operating conditions.

### SUMMARY OF THE INVENTION

The present invention relates to an industrial truck comprising a suspension unit for a driving and steering wheel. The industrial truck has at least two side wheels. The suspension unit further comprises a suspension rod, a rod support and a wheel support for supporting said driving and steering wheel. Restraining means is in engageable connection with the driving and steering wheel. The restraining means is engaged relative the wheel support of the suspension. The wheel support is fixed to the suspension rod and the restraining means has an outer end that is engaged to the suspension rod via a support plate. The outer end is in resilient engagement with the rod support and the wheel support via the support plate. The restraining means are capable of decreasing or stopping the vertical movement of the driving and steering wheel.

According to the solution of the present invention, it was realized that the lateral stability could be significantly improved during certain operating conditions, by temporarily accepting slightly reduced driving properties. By providing a reduced pressure on the driving and steering wheel, the lateral stability can be accomplished. This is achieved by blocking the resilience of the driving and steering wheel suspension at a moment when lateral instable condition occurs or it is predetermined that the system detects that there could be a risk for a lateral instability. However, it is also within the meaning of the present invention, at certain operating conditions, that there is no need to actually reduce the pressure on the driving and steering wheel, but to instantly block or freeze the resilience of the driving and steering wheel suspension at a certain pressure condition on the driving and steering wheel.

### BRIEF DESCRIPTION OF THE DRAWINGS

The invention will hereinafter be described with reference to an embodiment of the invention and the enclosed figures, where
- Figure 1: shows an industrial truck in which the present invention can be put to use;
- Figure 2: shows a cut-out of the rear section of the industrial truck of figure 1;
- Figure 3: is a view of a driving and steering unit, a tiller arm, and a suspension unit of the industrial truck of figures 1-2;
- Figure 4: is a perspective view of a suspension unit comprising a driving and steering unit bracket, two suspension rods, as well as upper and lower suspension rod supports of the industrial truck of figure 1-3; and
- Figure 5: illustrates a first embodiment of a suspension unit according to the present invention.

### DETAILED DESCRIPTION

The industrial truck of the present invention will now be described by way of example only. The disclosure is not intended to limit the scope of the enclosed claims in any way.

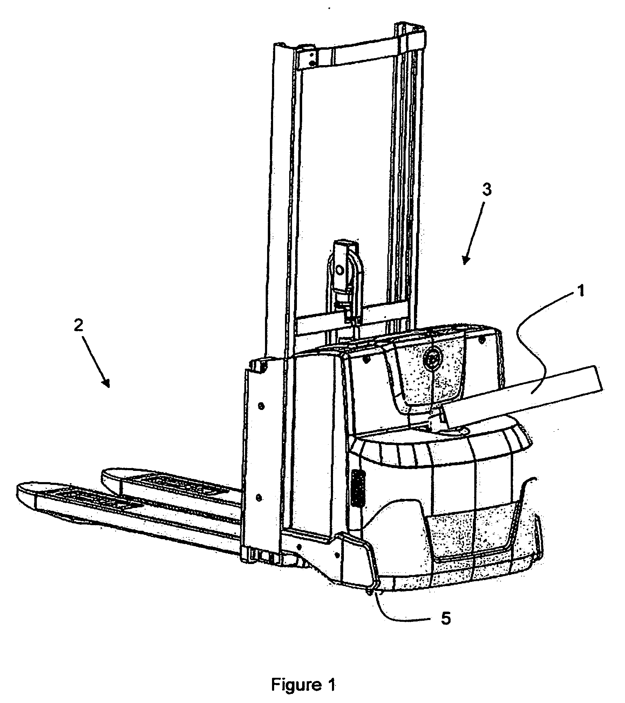

The suspension unit of the present invention can be used in an industrial truck of the kind shown in figure 1. This industrial truck is a so called tiller truck, where the operator walks behind the truck and controls the truck by means of a tiller arm 1 (schematically shown). However, according to the present invention, the industrial truck can be of another kind (not shown).

The truck can also be furnished with a platform (not shown) on which an operator can stand and travel with the truck when operating it. In the truck shown in figure 1, two lift forks 2 project from the truck body 3. Theses forks 2 engage the load, normally a pallet, which is to be handled.

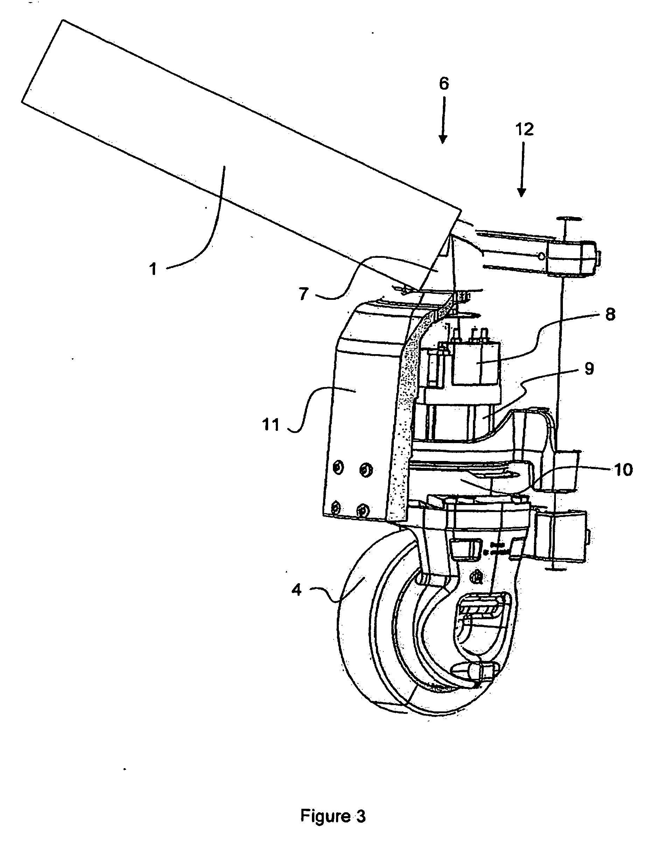

Three wheels 4, 5 are arranged under the truck body 3; one driving and steering wheel 4 (see figure 3), and two side wheels 5 (only one side wheel is shown in figure 1), which can be so called castor wheels. The side wheels 5 can preferably have a swivelling function. Small support wheels or rollers are arranged in the front ends of the forks 2, usually a boggy including two rollers on each front end. Thus, the tiller truck in fig. 1 comprises seven wheels/rollers including the driving and steering wheel 4. As mentioned above, within the scope of the present invention, the industrial truck can be of a kind with only a total of three to five wheels/rollers, including the driving and steering wheel.

The side wheels 5 are rotatable mounted around a vertical axis. The side wheels 5 are fixed in the vertical direction and arranged essentially symmetrically on both sides of the driving and steering wheel 4. Normally the two side wheels 5 carry the same load. The driving and steering wheel is resiliently biased towards the ground, on which the truck operates, by resilient means which are not described in detail in the present application. Thus, some of the truck body load is also carried by the driving and steering wheel 4. This arrangement of the side wheels 5 and the driving and steering wheel 4 enables the industrial truck to be controlled, i.e. accelerated, decelerated and steered sideways, by the driving and steering wheel 4 alone, while the side wheels 5 carry a part of the load and stabilize the truck.

The resilient suspension of the driving and steering wheel 4 provides a predetermined contact force between said wheel and the ground. Further, by way of the resilient suspension, the driving and steering wheel 4 can compensate for ground unevenness, without forwarding mechanical impacts to the truck body.

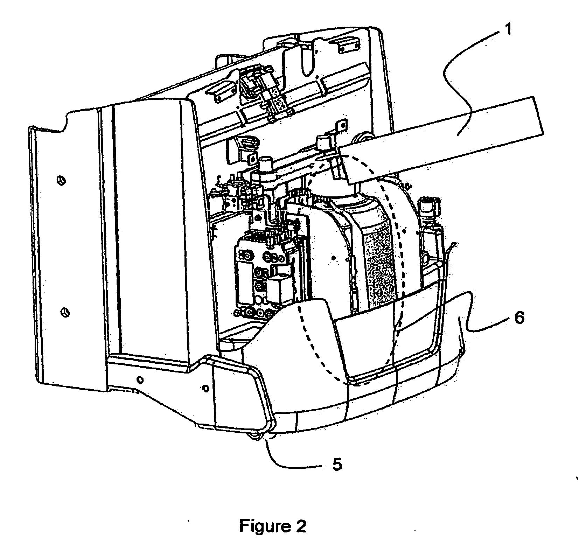

Figure 2 shows a partial cut-out of the industrial truck body 3, according to the prior art. The tiller arm 1 is attached to a driving and steering unit 6, which is shown in detail in figure 3. The driving and steering unit 6 comprises a tiller arm mounting 7, a brake 8, a motor 9, a bearing, a transmission 10, and the driving and steering wheel 4. The bearing can be located between the motor 9 and the transmission 10, the bearing is however not indicated in figure 3.

In use, the industrial truck is steered sideways by means of the tiller arm 1. Rotation of said arm causes rotation of the tiller arm mounting 7, which is stationary connected to the wheel 4 through a sweeping member 11. Said sweeping member 11 has a curved cross section and is arched in its upper region so as to closely sweep around the motor 9 and transfer steering force from the tiller arm mounting 7 to the wheel 4.

Figure 3 indicates a suspension unit 12, according to the prior art, for the driving and steering unit 6 arranged in the tiller truck shown in figures 1-2, in which the present invention can be put to use. However, according to the present invention, the suspension unit can be of another kind as further elucidated below with reference to figure 6. In the case of the suspension unit 12 in figure 3, the motor 9 is stationary with respect to the suspension unit 12. Thus, on sideways steering, the motor 9 does not rotate with the driving and steering unit 6. However, in alternative embodiments, the motor can be arranged to rotate concurrent with the driving and steering unit 6.

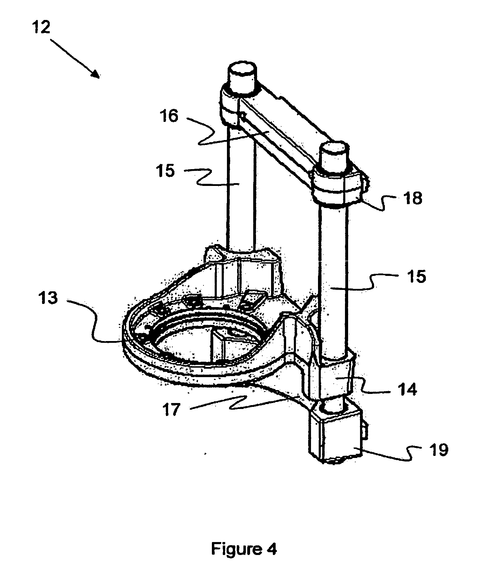

Figure 4 is a perspective view of the suspension unit 12. The suspension unit 12 comprises a driving and steering unit bracket 13, two bracket supports 14, two suspension rods 15, as well as upper and lower suspension rod supports 16, 17. In the industrial truck, the driving and steering unit bracket 13 with the bracket supports 14 act as a wheel support 13, 14. The driving and steering unit bracket 13 is axially movable attached to the truck body 3 and carries the driving and steering unit 6. The driving and steering unit 6 can be attached to the bracket 13 by bolting. In a first embodiment, the bracket supports 14, which can be formed in one piece with the bracket 13, are fixed to the suspension rods 15, e.g. by press fitting. The upper and lower suspension rod supports 16, 17 are firmly attached to the truck body 3, e.g. by means of bolting. The suspension rods 15 can slide axially through the upper and lower suspension rod supports 16, 17. Sliding bearings are provided in order to facilitate this sliding. For means of simplicity, these bearings will now be described with reference to one of the two suspension rods only. The upper rod support 16 comprises an upper sliding bearing 18, and the lower rod support 17 comprises a lower sliding bearing 19. In accordance with a second embodiment, on the contrary, the suspension rods 15 are fixed to the upper and lower suspension rod supports 16, 17, whereas the bracket supports 14 can slide axially on the suspension rods 15.

According to the present invention, the industrial truck has restraining means in engageable connection with the driving and steering wheel. The restraining means are capable of decreasing or stopping the vertical movement of the driving and steering wheel. The restraining means can be designed according to different embodiments. Preferably, the restraining means comprises mechanical stopping means, hydraulically stopping means and/or electromechanical stopping means.

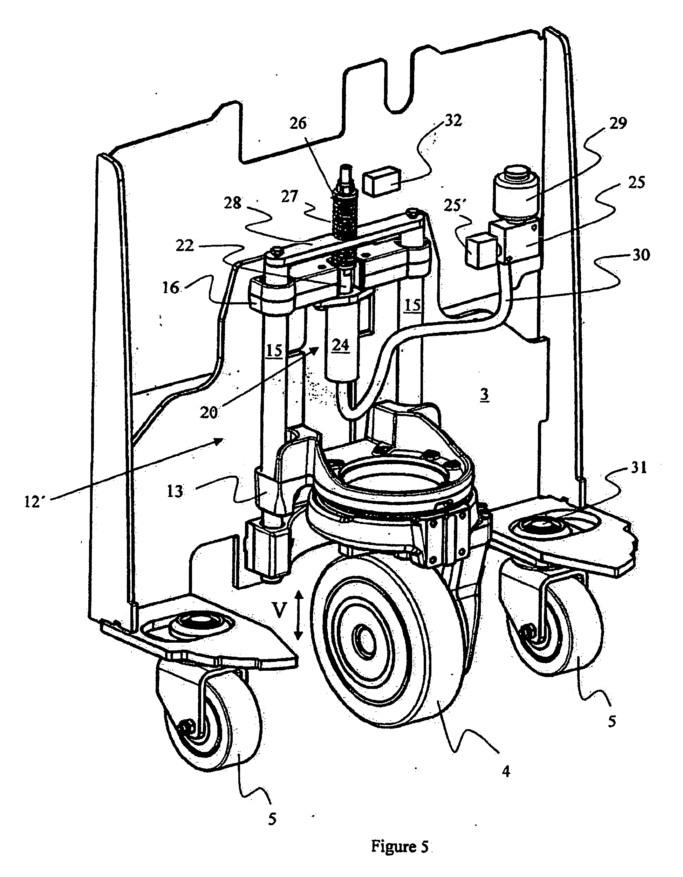

In figure 5, a first embodiment of a suspension unit 12' according to the present invention is shown. The suspension unit 12' comprises the similar features 13-19 as described above with reference to figures 3-4 with the similar technical function. Therefore, the same reference numerals have been used in figure 5. In addition, the suspension unit 12' according to the present invention comprises restraining means 20 in engageable connection with the driving and steering wheel 4. According to one embodiment, the restraining means comprises a hydraulic cylinder, having a piston 22 arranged in a cylinder 24. The outer free end 26 of the piston 22 is arranged, via a resilient connection 27, to a support plate 28 that connects the upper ends of the suspension rods 15. The outer free end 26 of the piston can be passed through a hole in the support plate 28. The resilient connection 27 suitably comprises a spring arranged around the piston end 26 and on each side of the support plate 28. The cylinder 24 is arranged to the upper rod support 16 that is firmly attached to the truck body 3. The hydraulic cylinder is provided with locking means, comprising a valve housing 25 and a valve 25'. Operation of the locking means results in that the piston 22 can be fixed or restrained in a certain position relative the cylinder 24. Hence, the restraining means can fix or restrain the relative movement of the truck body 3 in relation to the driving and steering wheel 4, and as a result, the restraining means 20 are capable of decreasing or stopping the vertical movement V of the driving and steering wheel 4.

Fluid is provided to/from to the cylinder 24, for controlling the hydraulic pressure in the cylinder 24 and thus the movement of the piston 22. The fluid, preferably oil, is provided by a tank 29 in connection via the valve housing 25 to the cylinder via a conduit 30. The valve 25' of the locking means is preferably electronically operated such that it is arranged in the valve housing 25 to open and close a supply of fluid to/from the cylinder 24. The valve is preferably an electromagnetic valve.

Preferably, the industrial truck according to the present invention comprises detection means. The detection means are arranged to detect an instable condition of the truck, and actuates the restraining means to decrease or stop the vertical movement V of the driving and steering wheel 4. The detection means may comprise at least one load cell 31 for detection of the pressure on one or more of the side wheels 5. In addition or alternatively, the detection means can be one or more sensors 32 arranged on the industrial truck for detection of the total load, the height of the lift forks, the acceleration sideways, the speed, skidding/slipping of the drive and steering wheel 4 and/or inclined condition of the industrial truck. Consequently, when a predetermined value of an instable condition is detected by the detection means 31, 32, a signal is sent, via a control unit/system (e.g. a computer system; not shown) for the truck, which actuates the restraining means in order to block or freeze the resilience of the driving and steering wheel suspension. Preferably, the control unit/system comprises a computer. More specifically, the industrial truck can be furnished with a truck computer. The truck computer is connected to the detection means 31, 32. Said computer can e.g. be positioned in a control handle (not shown), at the distal end of the tiller arm 1, and is provided with an input unit. The input unit comprises a display and/or control buttons, by means of which the user can control and monitor certain truck functions, such as speed, lifting, battery status and so on. The input unit of the truck computer can also be used for setting operation variables, such as maximum allowable speed, maximum allowable acceleration, battery type and battery capacity. Alternatively, the operation variables are set by an external programming device, which can be connected to the truck computer.

## Claims

1. An industrial truck comprising a suspension unit (12', 50) for a driving and steering wheel (4, 56), the industrial truck further has at least two side wheels (5), the suspension unit further comprises a suspension rod (15), a rod support (16) and a wheel support (13) for supporting said driving and steering wheel (4), **characterised in that** it further comprises restraining means (20) in engageable connection with the driving and steering wheel (4, 56), the restraining means (20) is engaged relative the wheel support (13) of the suspension, the wheel support is fixed to the suspension rod (15) and the restraining means (20) has an outer end (26) that is engaged to the suspension rod (15) via a support plate (28), and the outer end (26) is in resilient engagement (27) with the rod support and the wheel support via the support plate (28), such that the restraining means (20) are capable of decreasing or stopping the vertical movement (V) of the driving and steering wheel (4, 56).

2. The industrial truck according to claim 1, **characterised in that** it further comprises detection means (31, 32), the detection means are arranged to detect an instable condition of the truck, and actuates the restraining means (20) to decrease or stop the vertical movement of the driving and steering wheel (4, 56).

3. The industrial truck according to claim 1, **characterised in that** the suspension unit (12') comprises an additional suspension rod (15).

4. The industrial truck according to any of the preceding claims, **characterised in that** the restraining means (20) is a hydraulic cylinder, having a piston (22) and a cylinder (24), the hydraulic cylinder is provided with locking means (25, 25') comprising an electrically operated valve.

5. The industrial truck according to any of the preceding claims, **characterised in that** the industrial truck comprises seven wheels/rollers, including the driving and steering wheel (4, 56).

6. The industrial truck according to claim 2, **characterised in that** the detection means comprises at least one load cell (30) for detection of the pressure on one or more of the side wheels (5).

7. The industrial truck according to claim 2 or 6, **characterised in that** the detection means comprises one or more sensors (32) arranged on the industrial truck for detection of the total load, the height of the lift forks, the acceleration sideways, the speed, skidding/slipping of the drive and steering wheel (4, 56) and/or inclined condition of the industrial truck.

## Patentansprüche

1. Flurförderfahrzeug mit einer Aufhängungseinheit (12', 50) für ein Fahr- und Lenkrad (4, 56), wobei das Flurförderfahrzeug ferner mindestens zwei Seitenräder (5) aufweist, wobei die Aufhängung ferner eine Aufhängungsstange (15), einen Stangenhalter (16) und einen Radhalter (13) zum Halten des Fahr- und Lenkrades (4), aufweist, **dadurch gekennzeichnet dass** es ferner eine Rückhalteeinrichtung (20) in eingreifbarer Verbindung mit dem Fahr- und Lenkrad (4, 56) aufweist, wobei die Rückhalteeinrichtung (20) in relativem Eingriff mit dem Radhalter (13) der Aufhängung steht, der Radhalter an der Aufhängungsstange (15) befestigt ist und die Rückhalteeinrichtung (20) ein äußeres Ende (26) aufweist, das über eine Halteplatte (28) mit der Aufhängungsstange (15) in Eingriff steht, und das äußere Ende (26) über die Halteplatte (28) so im elastischen Eingriff (27) mit dem Stangenhalter und dem Radhalter ist, dass die Rückhalteeinrichtung (20) in der Lage ist, die vertikale Bewegung (V) des Fahr- und Lenkrads (4, 56) zu verringern oder zu stoppen.

2. Flurförderfahrzeug gemäß Anspruch 1, **dadurch gekennzeichnet dass** es ferner Detektionseinrichtungen (31, 32) aufweist, wobei die Detektionseinrichtungen eingerichtet sind, um einen instabilen Zustand des Förderfahrzeugs zu detektieren, und um die Rückhalteeinrichtung (20) zu betätigen, um die vertikale Bewegung des Fahr- und Lenkrads (4, 56) zu verringern oder zu stoppen.

3. Flurförderfahrzeug gemäß Anspruch 1, **dadurch gekennzeichnet dass** die Aufhängungseinheit (12') eine zusätzliche Aufhängungsstange (15) aufweist.

4. Flurförderfahrzeug gemäß einem der vorangegangenen Ansprüche, **dadurch gekennzeichnet dass** die Rückhalteeinrichtung (20) ein hydraulischer Zylinder ist, der einen Kolben (22) und einen Zylinder (24) aufweist, wobei der hydraulische Zylinder mit Verriegelungseinrichtungen (25, 25') versehen ist, die ein elektrisch betriebenes Ventil aufweisen.

5. Flurförderfahrzeug gemäß einem der vorangegangenen Ansprüche, **dadurch gekennzeichnet dass** das Flurförderfahrzeug sieben Räder/Rollen einschließlich des Fahr- und Lenkrads (4, 56) aufweist.

6. Flurförderfahrzeug gemäß Anspruch 2, **dadurch gekennzeichnet dass** die Detektionseinrichtung mindestens einen Kraftaufnehmer (30) zur Detektion des Drucks an einem oder mehreren der Seitenräder (5) aufweist.

7. Flurförderfahrzeug gemäß Anspruch 2 oder 6, **dadurch gekennzeichnet dass** die Detektionseinrichtung einen oder mehrere Sensoren (32) aufweist, die zur Detektion der Gesamtlast, der Höhe der Hubgabeln, der Seitenbeschleunigung, der Geschwindigkeit, von Schleudern/Rutschen des Fahr- und Lenkrads (4, 56) und/oder eines geneigten Zustands des Flurförderfahrzeugs, an dem Flurförderfahrzeug angeordnet sind.

## Revendications

1. Chariot de manutention comprenant une unité de suspension (12', 50) destinée à une roue motrice et directrice (4, 56), le chariot de manutention présente en outre deux roues latérales (5) au moins, l'unité de suspension comprend en outre une tige de suspension (15), un support de tige (16) et un support de roue (13) pour supporter ladite roue motrice et directrice (4), **caractérisé en ce qu'**il comprend en outre un moyen de retenue (20) en connexion de mise en prise avec la roue motrice et directrice (4, 56), le moyen de retenue (20) est mis en prise avec le support de roue (13) de la suspension, le support de roue est fixé à la tige de suspension (15) et le moyen de retenue (20) présente une extrémité extérieure (26) qui est mise en prise avec la tige de suspension (15) via une plaque de support (28), et l'extrémité extérieure (26) est en mise en prise élastique (27) avec le support de tige et le support de roue via la plaque de support (28), de sorte que le moyen de retenue (20) puisse réduire ou arrêter le déplacement vertical (V) de la roue motrice et directrice (4, 56).

2. Chariot de manutention selon la revendication 1, **caractérisé en ce qu'**il comprend en outre des moyens de détection (31, 32), les moyens de détection sont agencés de façon à détecter un état instable du chariot, et actionne le moyen de retenue (20) afin de réduire ou arrêter le déplacement vertical de la roue motrice et directrice (4, 56).

3. Chariot de manutention selon la revendication 1, **caractérisé en ce que** l'unité de suspension (12') comprend une tige de suspension supplémentaire (15).

4. Chariot de manutention selon l'une quelconque des revendications précédentes, **caractérisé en ce que** le moyen de retenue (20) est un vérin hydraulique présentant un piston (22) et un cylindre (24), le vérin hydraulique est doté de moyens de verrouillage (25, 25') comprenant une vanne actionnée électriquement.

5. Chariot de manutention selon l'une quelconque des revendications précédentes, **caractérisé en ce que** le chariot de manutention comprend sept roues/rouleaux, y compris la roue motrice et directrice (4, 56).

6. Chariot de manutention selon la revendication 2, **caractérisé en ce que** les moyens de détection comprennent au moins un capteur de force (30) destiné à détecter la pression exercée sur une ou plusieurs des roues latérales (5).

7. Chariot de manutention selon la revendication 2 ou 6, **caractérisé en ce que** les moyens de détection comprennent un ou plusieurs capteurs (32) disposés sur le chariot de manutention pour détecter la charge totale, la hauteur des fourches de levage, l'accélération latérale, la vitesse, le ripage/le glissement de la roue motrice et directrice (4, 56) et/ou l'état d'inclinaison du chariot de manutention.
